# EUROPÄISCHE PATENTSCHRIFT

(11) **EP 1 468 899 B1**
(45) Veröffentlichungstag und Bekanntmachung des Hinweises auf die Patenterteilung: **11.05.2011**
(21) Anmeldenummer: 04008742.1
(22) Anmeldetag: 13.04.2004
(51) Int. Cl.: B62D 12/00, B62D 49/06, B62D 53/00, E02F 9/08

(54) **Landwirtschaftliche Zugmaschine mit Rahmenknicklenkung**
Agricultural towing vehicle with articulated frame steering
Véhicule de traction agricole avec direction pivotante des châssis

(30) Priorität: 14.04.2003 DE 10317302
(43) Veröffentlichungstag der Anmeldung: 20.10.2004
(73) Patentinhaber: DTU Deutsche Traktoren Union GmbH, 99326 Stadtilm (DE)
(72) Erfinder: Döll, Hartmut, Dr., 01558 Grossenhain (DE); Schneider, Toralf, 01665 Triebischtal-Piskowitz (DE)
(74) Vertreter: Liedtke, Klaus

(56) Entgegenhaltungen:
- EP-A- 0 520 389
- EP-A- 0 985 336
- EP-A- 1 159 869
- WO-A-91/09765
- DE-A1- 2 434 556
- DE-A1- 3 623 347
- DE-A1- 19 822 809
- DE-U1- 9 107 488

## Beschreibung

Die Erfindung betrifft eine allradgetriebene, landwirtschaftliche Zugmaschine mit luftbereiften Rädern und Rahmenknicklenkung mit einem Vorderrahmen, einem Hinterrahmen und einem Knickgelenk, wobei am Vorderrahmen und am Hinterrahmen jeweils eine Hauptachse mit einer angetriebenen Welle angeordnet ist.

Die Erfindung wird vorzugsweise für Traktoren mit einem Gewicht von mehr als 15 Tonnen mit Leistungen zwischen 300 und 800 PS und angewendet.

Landwirtschaftliche Zugfahrzeuge mit hoher Leistung sind Schleppfahrzeuge ohne unmittelbare Beladung und müssen regelmäßig ein hohes Gewicht aufweisen, um zur Erzielung einer hohen Zugkraft die erforderliche Kraft auf den Boden zu übertragen. Hohe Zugkräfte sind bei landwirtschaftlichen Zugfahrzeugen, insbesondere beim Einsatz von zu schleppenden Großgeräten erforderlich. Der Einsatz von Großgeräten ist insbesondere zur ökonomischen Bewirtschaftung großer Felder erforderlich.
Bei einer Vielzahl von Feldern bestehen demgegenüber häufig hohe ökologische Anforderungen; beim Befahren derartiger Böden sollen zur Bodenschonung lediglich geringe Flächenkräfte auf den Boden einwirken. Zur Einhaltung geringer Bodendrücke beim Einsatz von landwirtschaftlichen Zugfahrzeugen mit hohem Gewicht sind Lösungen bekannt.

Beispielsweise sind leistungsstarke, schwere Traktoren mit Gleisbändern bekannt, die zwar hohe Gewichte, aber durch die Größe der Aufstellfläche der Gleisbänder auf ebenen Böden einen geringen Kontaktflächendruck aufweisen sollen.

Nachteilig ist dabei, dass Traktoren mit Gleisbändern die Last über Laufrollen auf den Boden abstützen und dabei unter den Laufrollen sehr hohe Kontaktdrücke verursachen.
Des weiteren ist dabei nachteilig, dass derartige Traktoren mit Gleisbändern regelmäßig Breiten zwischen 3 in und 4 m aufweisen und dadurch in Deutschland zur Teilnahme am Straßenverkehr jeweils einer Ausnahmegenehmigung für Breiten über 2,55 m bedürfen. Weiterhin wird durch die Fahrwerkskonstruktion der Fahrkomfort stark eingeschränkt, so dass Fahrgeschwindigkeiten von maximal 30 km/h den Straßenverkehr erheblich beeinträchtigen.

Bei leistungsstarken, schweren Traktoren ist weiterhin die Anordnung von Breitreifen oder von Zwillingsreifen bekannt, die ebenfalls eine Reduzierung des Kontaktdrucks bewirken sollen.

Nachteilig ist dabei ebenfalls, dass diese Traktoren regelmäßig Breiten von über 2,55 m aufweisen und dadurch zur Teilnahme am Straßenverkehr jeweils einer Ausnahmegenehmigung für Breiten bedürfen. Bei temporär zu verwendenden Zwillingsreifen, die lediglich auf dem Feld verwendet werden sollen, ist nachteilig, dass eine Montage der Zwillingsräder nur unter erheblichem zeitlichen
und technischen Aufwand möglich ist und so bei jedem Wechsel zusätzliche Kosten verursacht.
Des weiteren ist auch bei derartigen Traktoren nachteilig, dass diese nur für sehr ebene Felder bodenschonend einsetzbar sind; beim Befahren von Böden, die nicht eben sind, werden partiell sehr hohe Bodendrücke verursacht. Insbesondere wird der Boden beim Überfahren von Kuppen unter den inneren Rädern und beim Durchfahren von Senken unter den äußeren Rädern jeweils hohen Drücken ausgesetzt. Bei der Verwendung von Zwillingsrädern wird der Reifendruck regelmäßig um den Faktor 1,75 erhöht, um der Verminderung der Bodenbelastung und des Schlupfes entgegenzuwirken.
Weiterhin wird auf nachgiebigem Ackerboden bei breiten Reifen und bei Zwillingsreifen ein höherer Fahr- bzw. Rollwiderstand wirksam.

Im Stand der Technik sind darüber hinaus leistungsstarke, schwere, allradgetriebene, landwirtschaftliche Zugmaschinen mit luftbereiften Rädern mit großen Durchmessern und mit Rahmenknicklenkung bekannt. Dabei ist an Vorderrahmen und Hinterrahmen jeweils eine angetriebene Achse mit je zwei Rädern angeordnet. Die großen Räder weisen zumindest bei geringem Reifenluftdruck eine jeweils große Aufstandsfläche auf und ermöglichen dadurch die Einhaltung eines geringen Kontaktflächendruckes.

Nachteilig ist dabei, dass in Folge des zur Bodenschonung erforderlichen geringen Reifenluftdruckes von weniger als 1,0 bar, insbesondere bei Radlasten mehr als 2500 kg, ein Schlupf zwischen Felgen und Reifen zu verzeichnen ist, der nicht nur die Übertragung hoher Leistungen unmöglich macht, sondern darüber hinaus eine Schädigung der auf den Felgen rutschenden Reifen zur Folge hat und bis zur Einstellung der Betriebsbereitschaft des Traktors oder zur Zerstörung des Reifens führen kann. Dabei ist besonders nachteilig, dass für derartige Traktoren mit Gewichten von mehr als 18.000 kg, die zur Erzielung ausreichender Zugkräfte erforderlich sind, Ausnahmegenehmigungen für die Straßenbenutzung wegen Überschreitung zulässiger Achsenlasten notwendig ist.

Des weiteren ist bei derartigen Zugmaschinen das Verhältnis zwischen Zugkraft und Fahrzeuggewicht, der so genannte geringe Triebkraftbeiwert in einem Bereich von etwa zwischen 0,50 und 0,65 unzureichend. Des weiteren können sich Achslasten unter Zugbelastung in Abhängigkeit von der Art der Anhängung ungünstig verändern.

Nachteilig bei den bekannten leistungsstarken, schweren, allradgetriebenen, landwirtschaftlichen Zugmaschinen mit luftbereiften Rädern ist außerdem der aus dem geringen Triebkraftbeiwert und dem hohen Schlupf resultierende hohe Kraftstoffverbrauch.

Aus DE 198 22 809 A1 ist eine allradgetriebene, landwirtschaftliche Zugmaschine bekannt mit Rahmenknicklenkung, einem Vorderrahmen, einem Hinterrahmen und einem Knickgelenk, wobei am Vorderrahmen und am Hinterrahmen jeweils eine Hauptachse mit einer angetriebenen Welle angeordnet ist, mit der Eigenschaft, dass an jedem Ende jeder Hauptachse jeweils ein um die Hauptachse schwenkbares zweiarmiges Pendel angeordnet ist, an dessen Enden jeweils ein einzelnes Rad mittels einer Radachse angeordnet ist, wobei jeweils eine Hauptachse mit zwei Pendeln und vier Rädern ein Tandempendel bildet. Ein Knickgelenk weist ein oberes Gelenk und ein unteres Gelenk auf. Zwischen Vorderrahmen und Hinterrahmen ist ein Buchsendrehgelenk angeordnet.

Nachteilig ist bei der bekannten landwirtschaftlichen Zugmaschine, dass deren Hinterrahmen großen Impulsen und Kräften quer zur Fahrtrichtung ausgesetzt ist, sofern ein angehängtes Gerät oder ein Anhänger mittels einer Anhängerkupplung mit dem Hinterrahmen der Zugmaschine verbunden ist.

Der Erfindung liegt die Aufgabe zu Grunde, eine allradgetriebene, landwirtschaftliche leistungsstarke Zugmaschine mit luftbereiften Rädern und Rahmenknicklenkung, mit einem Vorderrahmen, einem Hinterrahmen und einem Knickgelenk und jeweils einer Hauptachse mit einer angetriebenen Welle am Vorderrahmen und am Hinterrahmen anzugeben, die einerseits bei hohem Gewicht, insbesondere bei einem Gewicht zwischen 14 und 24 t, und hoher Leistung, insbesondere einer Leistung zwischen 300 - 800 PS, auch bei Reifenluftdrücken zwischen 0,60 bis 0,80 bar, bei einer Radlast von nicht mehr als 2500 kg mit üblichen Reifengrößen einerseits einen geringen Schlupf zwischen Reifen und Felgen und einem Triebkraftbeiwert bis 80 % aufweist und die andererseits mit einer Fahrzeugbreite von nicht mehr als 2,55 m sowie einer Fahrgeschwindigkeit bis 60 km/h am öffentlichen Straßenverkehr teilnehmen kann und bei der seitliche Kräfte aus angehängten Geräter auf der Hinterrahmen reduziert werden.

Erfindungsgemäß wird die Aufgabe mit den in den Ansprüchen 1 bis 3 angegebenen Merkmalskombinationen gelöst.

Vorteilhafte Ausgestaltungen sind in den Unteransprüchen angegeben.

Die Erfindung weist eine Reihe von Vorteilen auf.

Durch die Anordnung eines zweiarmigen Pendels an jedem Ende einer Hauptachse, welches um die Hauptachse schwenkbar ist und an dessen Enden jeweils ein einzelnes Rad mittels einer Radachse angeordnet ist, an einer allradgetriebenen landwirtschaftlichen Zugmaschine mit luftbereiften Rädern und Rahmenknicklenkung, mit einem Vorderrahmen, einem Hinterrahmen und einem Knickgelenk, wobei am Vorderrahmen und am Hinterrahmen jeweils eine Hauptachse mit einer angetriebenen Welle angeordnet ist, sowie durch die Anordnung von jeweils vier der acht Räder an jeder Seite der Zugmaschine in Fahrtrichtung in einer Spur hintereinander, wobei jeweils zwei an einer Hauptachse angeordnete Pendel um die Hauptachse gegeneinander verdrehbar sind, gelingt es, eine Zugmaschine anzugeben, welche bei einer Breite von weniger als 2,55 m und einer Radlast von weniger als 2500 kg sowohl am öffentlichen Straßenverkehr teilnehmen kann, als auch beim Einsatz auf nichtebenen Feldern bodenschonend einsetzbar und Triebkraftbeiwerte bis 0,80 ermöglicht. Insbesondere ist durch die Anordnung von jeweils zwei gegeneinander verdrehbaren Pendeln an jeweils dem Vorderrahmen und dem Hinterrahmen sichergestellt, dass unabhängig von der Oberfläche des Feldes und unabhängig von Auslenkungen einzelner Räder die Last eines einzelnen Rades auf dem Boden stets konstant ist. Dadurch werden Spitzenbelastungen beim Durchfahren von Senken oder Hohlen vermieden. Des weiteren ist vorteilhaft, dass durch die Anordnung von jeweils vier Rädern in einer Spur hintereinander lediglich durch das erste, nämlich das vordere Rad ein relativ hoher Anteil der Motorleistung zur Bereitung der Spur aufgewendet werden muss, während durch die drei nachfolgenden Räder die Motorleistung fast vollständig im Vortrieb bzw. Zugkraft umgewandelt werden kann.

Außerdem ist vorteilhaft, dass durch die Anordnung von acht Rädern die Radlasten uns somit auch die übertragenen Kräfte jeweils niedrig gehalten werden können und somit der Schlupf zwischen jeweils einem Rad und der zugehörigen Felge sehr gering ist, so dass es möglich ist, den Reifendruck auf etwa 0,6 bar gegenüber bei herkömmlichen Zugmaschinen üblicherweise 1,2 bar bis 1,6 bar zu reduzieren; dadurch gelingt eine wirkungsvolle Reduzierung des maximalen Kontaktdruckes unter einem einzelnen Rad zur Bodenschonung und zur Schlupfininderung.

Des weiteren ist vorteilhaft, dass durch die Anordnung der als Tandem-Pendel bezeichneten Konstruktion zweier gegeneinander verdrehbarer Pendel die Anordnung einer Federung nicht erforderlich ist; beim Überfahren eines Hindernisses der Höhe H mit einem einzelnen Rad beträgt die Auslenkung des Teilrahmens des Rades lediglich ein Viertel der Höhe des Hindernisses. Durch diese ausgleichende Eigenschaft ergeben sich sehr komfortable Fahreigenschaften, insbesondere weisen die erfindungsgemäßen Zugmaschinen nicht die Springeffekte herkömmlicher luftbereifter Zugmaschinen mit insgesamt vier Rädern auf.

Durch die Ausbildung des Knickgelenkes für die Rahmenknicklenkung mit einem oberen Gelenk und einem unteren Gelenk gelingt eine Reduzierung der Belastung für das Knickgelenk bei Momenteneinwirkung um die Fahrzeugquerachse.

Bei der erfindungsgemäß vorgesehenen Anordnung der Anhängekupplungen für landwirtschaftliche Geräte, insbesondere Zugpendel und Drei-Punkt-Anhängung, sowie der Anhängerkupplung für Anhänger vertikal drehbar im Bereich des Mittelpunktes zwischen den vier Rädern des hinteren Rahmens ist vorteilhaft, dass auch bei Lenkkorrekturen der Zugmaschine insbesondere aufgesattelte landwirtschaftliche Maschinen und Anhänger im Bereich der Anhängerkupplung während des Arbeitsprozesses keinen bzw. relativ geringen Impulsen und Kräften quer zur Fahrtrichtung ausgesetzt werden. Weiterhin werden die Anhängerkupplungen wegen des möglichen Kraftwechsels gedämpft bzw. entsprechend der Lenkbewegung zwangsgeführt.

Eine vorteilhafte Ausgestaltung sieht vor, zur Tordierbarkeit zwischen Vorderrahmen und Hinterrahmen ein Buchsendrehgelenk anzuordnen. Dadurch wird auf technisch einfache Weise eine Tordierbarkeit ermöglicht; diese Ausführungsform ist insbesondere für Zugmaschinen mit einer Motorleistung bis 800 PS geeignet.

Eine weitere allradgetriebene, landwirtschaftliche Zugmaschine mit luftbereiften Rädern und Rahmenknicklenkung, einem Vorderrahmen, einem Hinterrahmen und einem Knickgelenk sieht vor, an Vorder- und Hinterrahmen jeweils zwei Hauptachsen anzuordnen, an deren Enden jeweils ein einzelnes Rad mittels einer Radachse angeordnet ist, wobei jeweils vier der acht Räder an jeder Seite der Zugmaschine in Fahrtrichtung in einer Spur hintereinander angeordnet sind. Vorteilhaft ist dabei ebenfalls insbesondere der hohe Triebkraftbeiwert, der dadurch ermöglicht wird, dass die Reifen optimal belastet werden und die hintereinander laufenden Räder in vorverdichtetem Boden bei zunehmend geringerem Rollwiderstand zunehmend höhere Zugkraft entwickeln.

Eine weitere allradbetriebene, wirtschaftliche Zugmaschine mit luftbereiften Rädern und Rahmenknicklenkung, einem Vorderrahmen, einem Hinterrahmen und einem Knickgelenk, wobei am Vorderrahmen und am Hinterrahmen jeweils eine Hauptachse mit einer angetriebenen Welle angeordnet ist und bei dem ebenfalls an jedem Teilrahmen eine Tandemachse mit zwei Pendeln mit jeweils zwei Rädern an einer Hauptachse angeordnet ist und bei dem ebenfalls jeweils vier der acht Räder an jeder Seite der Zugmaschine in Fahrtrichtung in einer Spur hintereinander angeordnet sind, und bei dem jeweils zwei an einer Hauptachse angeordneten Pendel um die Hauptachse gegeneinander verdrehbar sind, sieht vor, dass das Knickgelenk ebenfalls ein oberes Gelenk und ein darunter angeordnetes unteres Gelenk mit jeweils wenigstens einer etwa frei drehbaren Drehachse beinhaltet, wobei die Gelenke jeweils ein Ende des Vorderrahmens mit einem Ende des Hinterrahmens wenigstens mittelbar verbinden und dass zur Tordierbarkeit zwischen Vorderrahmen und Hinterrahmen zwischen einem der Gelenke und einem der Enden entweder des Vorder- oder Hinterrahmen eine Koppelstange mit zweigelenkigen Enden angeordnet ist. Vorteilhaft ist dabei insbesondere, dass diese Ausbildung des Knickgelenkes sowohl zur Übertragung sehr hoher Zugkräfte geeignet ist und somit für Motorleistungen bis 800 PS einsetzbar ist, als auch das durch den Einsatz der Koppelstange, die als Druck- oder als Zugstange jeweils am oberen oder am unteren Gelenk angeordnet werden kann, auf einfache Weise eine verschleißarme technische Lösung ermöglicht wird.

Eine vorteilhafte Ausgestaltung sieht vor, dass die vertikale Drehachse des unteren Gelenkes und die vertikale Drehachse des oberen Gelenkes identisch sind. Vorteilhaft ist dabei ein kinematisch einfaches und sauberes Lenkverhalten, welches Fahreigenschaften der erfindungsgemäßen Zugmaschine ermöglichen, die etwa denen eines Lastkraftwagens entsprechen.

Eine weitere Ausgestaltung sieht vor, einer Torsion zwischen Vorderrahmen und Hinterrahmen entgegenwirkende Rückstelleinrichtung anzuordnen; vorteilhaft ist dabei insbesondere, dass beim Befahren von sehr unebenem Gelände verdrehungsproportionale Momente von einem Teilrahmen auf den jeweils anderen Teilrahmen übertragen werden können und dass dadurch eine Beruhigung des Fahrzeugs um die Fahrzeuglängsachse ermöglicht wird. Es ist auch möglich, die einer Torsion entgegenwirkende Rückstelleinrichtung mit Dämpfungselementen zu koppeln, so dass eine besonders wirkungsvolle Beruhigung des Fahrzeuges um seine Fahrzeuglängsachse bei schneller Fahrt ermöglicht wird.

Eine weitere Ausgestaltung der erfindungsgemäßen Zugmaschinen sieht vor, dass zwischen der mindestens einen Hauptachse des Vorderrahmens und der mindestens einen Hauptachse des Hinterrahmens ein Differentialgetriebe mit einer zuschaltbaren Differentialsperre angeordnet ist; vorteilhaft ist dabei, dass sowohl bei üblichen Einsatzbedingungen das Zugfahrzeug einem geringen Verschleiß unterliegt als auch das bei großem Schlupf zwischen Zugfahrzeug und Boden durch eine zuschaltbare Differentialsperre eine Vergrößerung des Triebkraftbeiwertes ermöglicht wird.

Eine weitere Ausgestaltung sieht vor, eine Einrichtung zur Messung des Knickwinkels zwischen Vorderrahmen und Hinterrahmen sowie eine Steuerung zur automatischen Abschaltung von Differentialsperren bei Überschreiten eines bestimmten Knickwinkels anzuordnen; dabei ist vorteilhaft, dass verhindert wird, dass Reifen durch Unaufinerksamkeit des Fahrers beim Fahren von Kurven die Zugmaschine infolge zugeschalteter Differentialsperren einem unnötig hohen Verschleiß unterworfen sind.

Eine Ausgestaltung der Zugmaschinen mit einer oder zwei Tandempendelachsen sieht vor, dass jedes Pendel mehrteilig ist und jeweils zwei obere Druckstäbe und jeweils einen unteren Zugstab aufweist und dass jeweils zwei obere Druckstäbe und ein unterer Zugstab ein Dreieck bilden, wobei die beiden oberen Druckstäbe im Bereich eines Endes einer Hauptachse um diese Hauptachse verdrehbar miteinander verbunden sind. Vorteilhaft ist dabei, dass derartige Pendel mit einem geringen Gewicht bei hoher Belastbarkeit herstellbar sind und dass durch eine Höhendifferenz zwischen der Höhenlage der Hauptachse und der Höhenlage der Radachsen eine Vergrößerung der Bodenfreiheit der Zugmaschine ermöglicht werden kann.

Eine weitere Ausgestaltung sieht vor, dass an unteren Zugstäben der dreiteiligen Pendel jeweils eine Einstelleinrichtung zur Längenveränderung angeordnet ist; vorteilhaft ist dabei, dass die Bodenfreiheit derartiger Zugmaschinen variabel ist, was dem Fahren in höheren Pflanzenbeständen dienlich ist.

Durch die Anordnung einer Feder an den unteren Zugstäben von dreiteiligen Pendeln gelingt auf einfache Weise die Ausbildung einer zusätzlichen Fahrwerksfederung für derartige Zugmaschinen.

Durch die Anordnung von Messeinrichtungen zur Ermittlung der Zugkraft an den unteren Zugstäben von dreiteiligen Pendeln gelingt auf einfache Weise die Ermittlung der Summe der Radlasten beider an diesem Pendel angeordneter Räder sowie bei permanenter Messung der Zugkraft die Ermittlung fahrdynamischer Daten der Zugmaschine.

Eine weitere Ausgestaltung sieht eine dehnelastische Ausbildung der Koppelstange vor. Vorteilhaft ist dabei insbesondere die Ermöglichung einer Reduzierung von Stoßbelastungen in Fahrzeuglängsrichtung sowohl für das Gelenk, an welchem die Koppelstange angeordnet ist, als auch das darüber oder darunter angeordnete Gelenk.

Eine weitere Ausgestaltung von Zugmaschinen mit Tandemachse sieht vor, dass zwischen zwei Pendeln jeweils einer Hauptachse ein Differentialgetriebe mit einer zuschaltbaren Differentialsperre angeordnet ist; vorteilhaft ist dabei, dass sowohl ein verschleißarmes Durchfahren von engen Kurvenradien als auch der Aufbau einer hohen Zugkraft bei Geradeausfahrt bzw. bei geringen Lenkbewegungen unter widrigen Fahrbedingungen ermöglicht wird.

Eine weitere Ausgestaltung der Zugmaschinen mit Tandem-Doppelpendel sieht vor, dass an den Pendeln zumindest annähernd horizontal verlaufende Zugstangen mit jeweils zwei gelenkigen Enden angeordnet sind, wobei das erste Ende jeder Zugstange an einem vorderen oder einem hinteren Ende eines Pendels befestigt ist und das weitere Pendel der Zugstange entweder an einem Rahmen oder an der dazugehörigen Hauptachse im Bereich des dazugehörigen Rahmens befestigt ist. Vorteilhaft ist dabei, dass unter Aufrechterhaltung einer Verdrehbarkeit eines jeden Pendels um die Hauptachse eine deutliche Reduzierung von Momenten sowohl für die Hauptachse als auch für die Pendel ermöglicht wird. Des weiteren ist vorteilhaft, dass Horizontalkräfte, insbesondere beim schnellen Durchfahren enger Kurven, nahezu unmittelbar in den betreffenden Teilrahmen eingeleitet werden und keine zusätzlichen Kräfte oder Momente in Hauptachsen und Pendeln hervorrufen.

Die Erfindung wird im folgenden anhand eines Ausführungsbeispieles näher erläutert.

Dazu zeigen
- Figur 1: eine Draufsicht auf eine Ausführungsform einer Zugmaschine,
- Figur 2: eine schematische Seitenansicht einer ersten Ausführungsform eines Pendels,
- Figur 3: eine schematische Draufsicht auf eine zweite Ausführungsform eines Pendels,
- Figur 4: eine zugehörige Seitenansicht,
- Figur 5: eine isometrische Darstellung einer ersten Ausführungsform eines Knickgelenkes mit Koppelstange,
- Figur 6: eine isometrische Darstellung einer zweiten Ausführungsform eines Knickgelenkes mit Koppelstange,
- Figur 7: eine Draufsicht auf eine Systemdarstellung einer ersten Ausführungsform einer Rückstelleinrichtung,
- Figur 8: eine Draufsicht auf eine Systemdarstellung einer zweiten Ausführungsform einer Rückstelleinrichtung,
- Figur 9 und Figur 10: eine Untersicht auf eine Systemdarstellung einer Ausführungsform einer Lenkeinrichtung,
eine Seitenansicht einer Systemdarstellung einer Ausführungsform eines Knickgelenkes nach Figur 5 (nach Figur 6 horizontal gespiegelt).

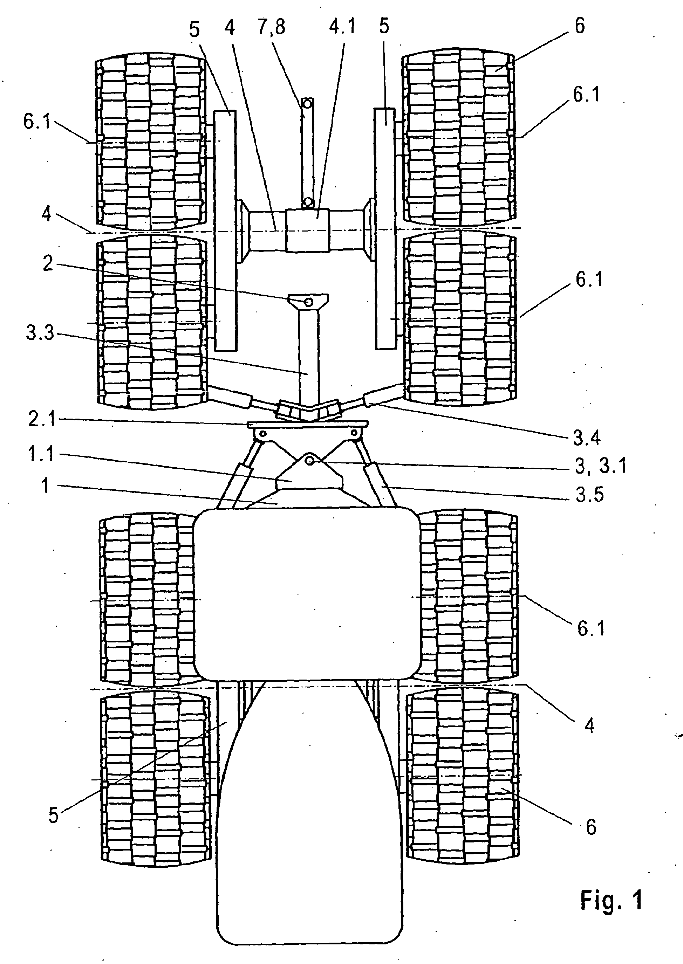

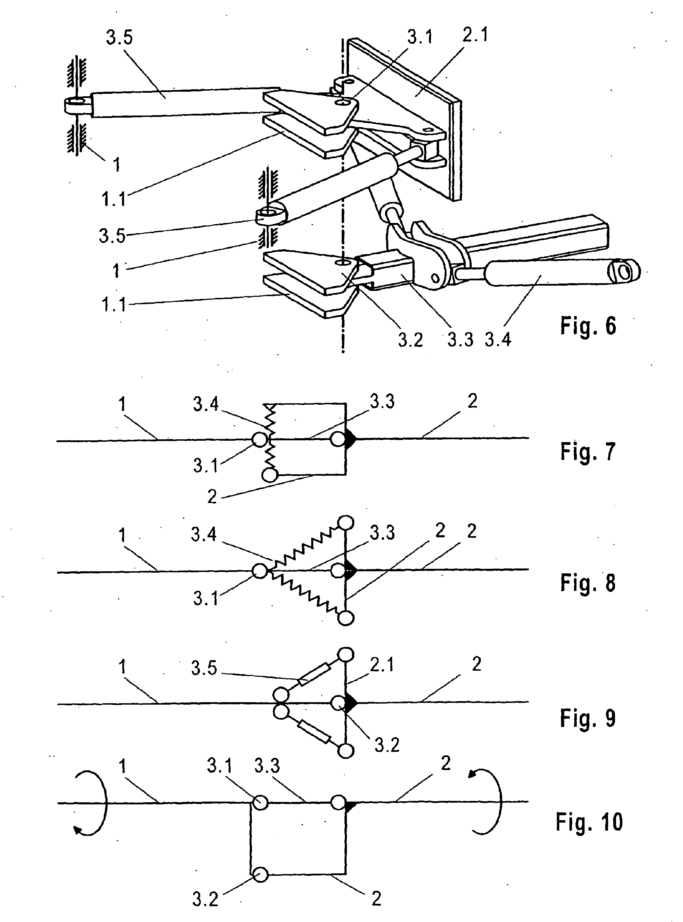

Figur 1 zeigt die Draufsicht einer landwirtschaftlichen Zugmaschine mit einem Vorderrahmen 1 und einem Hinterrahmen 2, die mit einem Knickgelenk 3 verbunden sind, wobei vom Hinterrahmen 2 zur besseren Übersicht nur der Teil dargestellt ist, der mittelbar mit dem Knickgelenk verbunden ist. Auf dem Vorderrahmen 1 sind ein Triebwerk sowie ein Führerhaus dargestellt. Sowohl am Vorderrahmen 1 als auch Hinterrahmen 2 ist jeweils eine Hauptachse 4 mit einer angetriebenen Welle angeordnet, wobei an jedem Ende jeder Hauptachse 4 ein etwa horizontal verlaufendes Pendel 5 mittig und drehbar um die Hauptachse 4 angeordnet ist. An jedem vorderen und hinteren Ende eines Pendels 5 ist jeweils ein Rad 6 mit einer angetriebenen Radachse 6.1 angeordnet. Alle Radachsen 6.1 sowie die Hauptachse 4 eines jeden Teilrahmens 1 und 2 verlaufen zueinander parallel. In der Draufsicht ist ein oberes Gelenk 3.1 dargestellt, welches mit einer vertikal starr mit dem Hinterrahmen verbundenen Platte 2.1 gelenkig verbunden ist. Ein in der Draufsicht nicht dargestelltes unteres Gelenk 3.2 bildet ein Ende eines unteren Koppelstabes 3.3. Das zweite Ende dieses Koppelstabes 3.3 ist mit dem Hinterrahmen 2 verbunden; der betreffende Bereich des Hinterrahmens 2 ist in der Draufsicht dargestellt. Die Wirkungsweise des hier dargestellten Knickgelenkes 3 ist ausführlich in Figur 6 dargestellt und beschrieben. Alle vier Räder eines Teilrahmens 1 und 2 Figur 1: stehen jederzeit mit jeweils der gleichen Kraft auf dem Boden; eine Federung ist wegen des geringen Luftdrucks und der Konstruktion der Tandemachse nicht erforderlich. Die Wirkungsweise des hier dargestellten Knickgelenks 3 ist ausführlich in Figur 6 dargestellt und beschrieben.

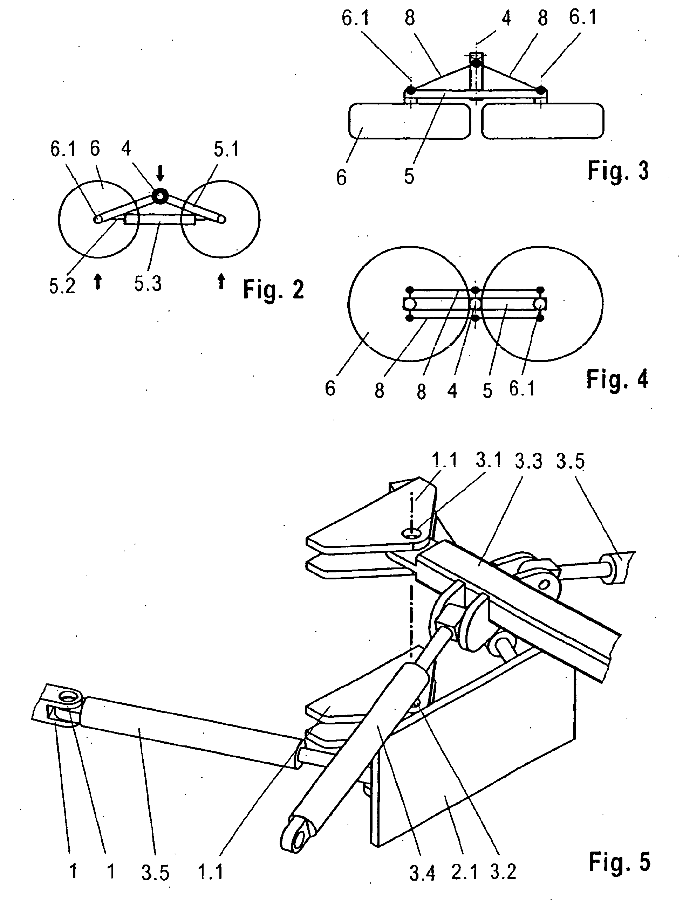

Bei der in Figur 2 dargestellten Seitenansicht einer Ausführungsform eines Pendels 5 wird das Pendel 5 aus zwei oberen Druckstäben 5.1 und einem unteren Druckstab 5.2 gebildet, wobei die Druckstäbe 5.1 stumpfwinklig zueinander verlaufen. Die Verbindungspunkte zwischen den Druckstäben 5.1 und dem Zugstab 5.2 sind gelenkig ausgebildet; der oben angeordnete Verbindungspunkt der beiden Druckstäbe 5.1 befindet sich etwa in Höhe der Hauptachse 4. Die Länge des Zugstabes 5.2 ist variabel einstellbar, so dass eine Höhendifferenz zwischen der Höhenlage der Hauptachse 4 und der Höhenlage der Radachsen 6.1 und damit die Bodenfreiheit des Zugfahrzeuges einstellbar ist. Im unteren Zugstab 5.2 ist eine Feder 5.3 angeordnet, die der Federung des gesamten Fahrzeuges dient.

Bei der in Figur 3 gezeigten Draufsicht auf ein einteiliges Pendel 5, an dessen Enden jeweils ein Rad 6 mittels jeweils einer Radachse 6.1 angeordnet ist, sind Zugstangen 8 angeordnet. Die Zugstangen 8 dienen einer Stabilisierung des Fahrverhaltens und einer Reduzierung von Momentenbelastungen für die Hauptachse 4 und das Pendel 5 um die vertikale Achse. Dabei sind an jedem Pendel 5 jeweils vier Zugstangen 8 angeordnet, nämlich jeweils zwei Zugstangen oberhalb des Pendels 5 und zwei Zugstangen unterhalb des Pendels 5. Die Enden der Zugstangen 8 sind jeweils gelenkig ausgebildet, wobei jeweils ein Ende am vorderen oder hinteren Bereich des Pendels 5 ober- bzw. unterhalb der Radachsen 6.1 am Pendel 5 und das jeweils andere Ende ober- bzw. unterhalb der Hauptachse 4 entweder am Rahmen 1, 2 oder an der Hauptachse 4 im Bereich des Rahmens 1, 2 angeordnet ist.

Die in Figur 4 dargestellte zugehörige Seitenansicht zeigt die Höhenlage der vier Zugstangen 8; die gelenkigen Anschlusspunkte der Zugstangen 8 sind elastisch ausgebildet, damit die Zugstangen 8 eine Verdrehung des Pendels 5 um die Hauptachse 4 nicht behindern. Es ist auch möglich, die in der Mitte der Darstellung abgebildeten Enden der Zugstangen 8 an einem Kranz auf der Hauptachse 4 anzuordnen und dadurch eine Verdrehbarkeit des Pendels 5 um die Hauptachse 4 zu ermöglichen. Insbesondere ist es dabei möglich, entweder den Kranz auf der Hauptachse 4 drehbar zu befestigen oder die Hauptachse 4 gegenüber dem Pendel 5 drehbar anzuordnen.

Figur 5 zeigt eine mögliche Ausführungsform eines Knickgelenkes mit einem Koppelstab 3.3, wobei der Koppelstab 3.3 an dem oberen Gelenk 3.1 angeschlossen ist. Das obere Gelenk 3.1 verbindet mittelbar den Vorderrahmen 1 mit dem Hinterrahmen 2, wobei das fest mit dem Vorderrahmen 1 verbundene Rahmenende 1.1 gelenkig mit der Koppelstange 3.3 verbunden ist. Die vertikale Drehachse des oberen Gelenkes 3.1 ist identisch mit der Drehachse des unteren Gelenkes 3.2, welches in der vorliegenden Abbildung verdeckt dargestellt ist. Am unteren Gelenk 3.2 ist ein mit dem Vorderrahmen 1 fest verbundenes Rahmenende 1.2 unmittelbar mit dem Hinterrahmen 2, nämlich mit zwei horizontalen Flanschen, welche an einer vertikal angeordneten Platte 2.1 verschweißt sind, gelenkig verbunden. Die Platte 2.1 bildet das Ende des hinteren Rahmens 2 und ist fest mit diesem verbunden. An den seitlichen Rändern der Platte 2.1 ist jeweils ein Hydraulikzylinder 3.5 gelenkig angeschlossen, dessen zweites Ende gelenkig mit dem Vorderrahmen 1 verbunden ist. Die beiden Hydraulikzylinder 3.5 werden wechselweise angesteuert und dienen der Einstellung eines Knickwinkels für das Knickgelenk 3. Die Drehachsen der Gelenke an den Enden der Hydraulikzylinder 3.5 verlaufen vertikal. Das in dieser Abbildung nicht gezeigte Ende des Koppelstabes 3.3 ist unmittelbar gelenkig mit dem Hinterrahmen 2 verbunden. Der Koppelstab 3.3 dient einer Tordierbarkeit zwischen Vorderrahmen und Hinterrahmen um die Fahrzeuglängsachse; zur Dämpfung einer Torsion zwischen Vorderrahmen 1 und Hinterrahmen 2 ist eine Rückstelleinrichtung am Koppelstab 3.3 angeordnet. Diese Rückstelleinrichtung besteht aus zwei Federelementen 3.4 mit zwei gelenkigen Enden mit jeweils etwa horizontal verlaufenden Drehachsen, wobei jeweils ein oberes Gelenk am Koppelstab 3.3 und ein unteres Gelenk im Endbereich des Hinterrahmens 2 angeordnet ist. Es ist auch möglich, die Federelemente 3.4 mit einem Dämpfungssystem zu koppeln; des weiteren ist es möglich, anstelle der Federelemente 3.4 Hydraulikzylinder zur planmäßigen Einstellung eines Torsionswinkels zwischen Vorderrahmen 1 und Hinterrahmen 2 anzuordnen.

Die in Figur 6 gezeigte isometrische Darstellung eines Knickgelenkes 3 zeigt eine Ausführungsform mit einer Koppelstange 3.3, welche am unteren Gelenk 3.2 angeordnet ist. Die hier gezeigte Ausführungsform ist die räumliche Darstellung der in Figur 1 gezeigten Draufsicht. Die Koppelstange 3.3 ist als Zugstange zwischen dem Rahmenende 1.1 und dem hier nicht dargestellten Ende des Hinterrahmens 2 ausgebildet. Die Hydraulikzylinder 3.5, welche zwischen dem Vorderrahmen 1 und der Platte 2.1, welche fest am Hinterrahmen 2 befestigt ist, angeordnet sind, befinden sich im oberen Bereich des Knickgelenkes. Die beiden Federelemente 3.4, welche am unteren Knickgelenk 3 angeschlossen sind, verlaufen von der Koppelstange 3.3 weg zum Hinterrahmen 2 hin leicht ansteigend.

Figuren 7 bis 10 zeigen in schematischer Wirkungsweise ein Knickgelenk mit oben angeordnetem Koppelstab 3.3.

Figur 7 zeigt den oberen Bereich des Knickgelenkes 3, wobei zwischen dem Vorderrahmen 1 und dem Hinterrahmen 2 ein Koppelstab 3.3 gelenkig angeschlossen ist. Im Endbereich des Hinterrahmens 2 ist eine Rückstelleinrichtung mit zwei Federelementen 3.4 angeordnet, wobei jeweils ein Ende eines Federelementes 3.4 an dem Koppelstab 3.3 in Nähe des oberen Gelenkes 3.1, in dem der Koppelstab 3.3 mit dem Vorderrahmen 1 verbunden ist, angeordnet ist und das andere Ende jedes Federelementes 3.4 an einer fest mit dem Hinterrahmen 2 verbundenen seitlichen Ausragung des Hinterrahmens 2 verbunden ist. Die Rückstellkraft der hier gezeigten Federelemente 3.4 wirkt rechtwinklig zur Stabachse des Koppelstabes 3.3 und ist etwa proportional zum Verdrehungsgrad zwischen Vorderrahmen 1 und Hinterrahmen 2.

Figur 8 zeigt eine modifizierte Ausführungsform, bei der das dem Vorderrahmen 1 zugewandte Ende des Hinterrahmens 2 eine seitliche Ausbildung des Hinterrahmens 2 bildet, an deren Enden ebenfalls Federelemente 3.4 angeordnet sind, die im Grundriss in einem Winkel zum Koppelstab 3.3 verlaufen und ebenfalls als Rückstelleinrichtung dienen.

Figur 9 zeigt den unteren Bereich des Knickgelenkes ohne die oben angeordnete Koppelstange 3.3. Am Ende des Hinterrahmens 2 ist fest die Platte 2.1 angeschlossen, an deren seitlichen Enden die Hydraulikzylinder 3.5 zur Einstellung eines Knickwinkels in dem unteren Gelenk 3.2 angeschlossen sind.

Figur 10 zeigt die zugehörige Seitenansicht mit dem oberen Gelenk 3.1 und dem darunter angeordneten Gelenk 3.2 ohne Darstellung der Hydraulikzylinder 3.5 und der Rückstelleinrichtung mit den Federelementen 3.4. An den Enden des Vorderrahmens 1 und des Hinterrahmens 2 sind Torsionsmomente angetragen, die eine Verdrehung bewirken, welche sich durch die Anordnung der Koppelstange, die seitlich ausweichen kann, ermöglicht wird. Die Größe der Normalkraft in der Koppelstange 3.3 lässt sich durch eine Vergrößerung des Abstandes zwischen dem oberen Gelenk 3.1 und dem unteren Gelenk 3.2 reduzieren.
Es ist auch möglich, hohe zusätzliche Ballast im Bereich des hinteren Tandempendel der Zugmaschine entfernbar anzuordnen, wobei der Ballast zur effektiven Zugkraftübertragung die Zugmaschine belastet, und wobei der Ballast im Austausch für technologisch bedingte Nutzmassen, insbesondere für zu transportierende Güter oder für aufzunehmende Arbeitsgeräte und - aggregate entfernt wird.

### BEZUGSZEICHENLISTE

- 1: Vorderrahmen
- 1.1: Rahmenende
- 2: Hinterrahmen
- 2.1: Platte
- 3: Knickgelenk
- 3.1: oberes Gelenk
- 3.2: unteres Gelenk
- 3.3: Koppelstange
- 3.4: Federelemente
- 3.5: Hydraulikzylinder
- 4: Hauptachse
- 4.1: Differentialgetriebe
- 5: Pendel
- 5.1: Druckstab
- 5.2: Zugstab
- 5.3: Feder
- 6: Rad
- 6.1: Radachse
- 7: Anhängekupplung
- 8: Zugstange

## Patentansprüche

1. Allradgetriebene, landwirtschaftliche Zugmaschine mit luftbereiften Rädern (6) und Rahmenknicklenkung, mit einem Vorderrahmen (1), einem Hinterrahmen (2) und einem Knickgelenk (3), wobei am Vorderrahmen (1) und am Hinterrahmen (2) jeweils eine Hauptachse (4) mit einer angetriebenen Welle angeordnet ist, wobei
an jedem Ende jeder Hauptachse (4) jeweils ein um die Hauptachse (4) schwenkbares, zweiarmiges Pendel (5) angeordnet ist, an dessen Enden jeweils ein einzelnes Rad (6) mittels einer Radachse (6.1) angeordnet ist, wobei jeweils eine Hauptachse (4) mit zwei Pendeln (5) und vier Rädern (6) ein Tandempendel bildet, wobei jedes zweiarmige Pendel (5) gegenüber dem korrespondierenden Pendel (5) der gleichen Hauptachse (4) unabhängig um die Hauptachse (4) schwenkbar ist,
dass jeweils vier der acht Räder (6) an jeder Seite der Zugmaschine in Fahrtrichtung in einer Spur hintereinander angeordnet sind,
dass jeweils zwei an einer Hauptachse (4) angeordnete Pendel (5) um die Hauptachse (4) gegeneinander verdrehbar sind,
dass das Knickgelenk (3) ein oberes Gelenk (3.1) und ein darunter angeordnetes unteres Gelenk (3.2) mit jeweils wenigstens einer etwa vertikalen Drehachse beinhaltet, wobei die Gelenke (3.1, 3.2) jeweils ein Ende des Vorderrahmens (1) mit einem Ende des Hinterrahmens (2) wenigstens mittelbar verbinden, **dadurch gekennzeichnet,**
**dass** zur Tordierbarkeit zwischen Vorderrahmen (1) und Hinterrahmen (2) entweder am Vorderrahmen (1) oder am Hinterrahmen (2) ein Buchsendrehgelenk angeordnet ist
und **dass** eine Anhängekupplung für landwirtschaftliche Geräte und Anhänger vertikal drehbar im Bereich des Mittelpunktes zwischen den vier Rädern des Hinterrahmens (2) angeordnet ist.

2. Allradgetriebene, landwirtschaftliche Zugmaschine mit luftbereiften Rädern (6) und Rahmenknicklenkung, mit einem Vorderrahmen (1), einem Hinterrahmen (2) und einem Knickgelenk (3), wobei am Vorderrahmen (1) und am Hinterrahmen (2) jeweils eine Hauptachse (4) mit einer angetriebenen Welle angeordnet ist, wobei jeweils vier der acht Räder (6) an jeder Seite der Zugmaschine in Fahrtrichtung in einer Spur hintereinander angeordnet sind, dass das Knickgelenk (3) ein oberes Gelenk (3.1) und ein darunter angeordnetes unteres Gelenk (3.2) mit jeweils wenigstens einer etwa vertikalen Drehachse beinhaltet, wobei die Gelenke (3.1, 3.2) jeweils ein Ende des Vorderrahmens (1) mit einem Ende des Hinterrahmens (2) wenigstens mittelbar verbinden, **dadurch gekennzeichnet,**
**dass** am Vorderrahmen (1) und am Hinterrahmen (2) jeweils zusätzlich eine zweite Hauptachse (4) angeordnet ist, an deren Enden jeweils ein einzelnes Rad (6) mittels einer Radachse (6.1) angeordnet ist, und
**dass** zur Tordierbarkeit zwischen Vorderrahmen (1) und Hinterrahmen (2) entweder am Vorderrahmen (1) oder am Hinterrahmen (2) ein Buchsendrehgelenk angeordnet ist
und **dass** eine Anhängekupplung für landwirtschaftliche Geräte und Anhänger vertikal drehbar im Bereich des Mittelpunktes zwischen den vier Rädern des Hinterrahmens (2) angeordnet ist.

3. Allradgetriebene, landwirtschaftliche Zugmaschine mit luftbereiften Rädern (6) und Rahmenknicklenkung, mit einem Vorderrahmen (1), einem Hinterrahmen (2) und einem Knickgelenk (3), wobei am Vorderrahmen (1) und am Hinterrahmen (2) jeweils eine Hauptachse (4) mit einer angetriebenen Welle angeordnet ist, wobei dass an jedem Ende jeder Hauptachse (4) jeweils ein um die Hauptachse (4) schwenkbares, zweiarmiges Pendel (5) angeordnet ist, an dessen Enden jeweils ein einzelnes Rad (6) mittels einer Radachse (6.1) angeordnet ist, wobei jeweils eine Hauptachse (4) mit zwei Pendeln (5) und vier Rädern (6) ein Tandempendel bildet,
dass jeweils vier der acht Räder (6) an jeder Seite der Zugmaschine in Fahrtrichtung in einer Spur hintereinander angeordnet sind,
dass jeweils zwei an einer Hauptachse (4) angeordnete Pendel (5) um die Hauptachse (4) gegeneinander verdrehbar sind,
dass das Knickgelenk (3) ein oberes Gelenk (3.1) und ein darunter angeordnetes unteres Gelenk (3.2) mit jeweils wenigstens einer etwa vertikalen Drehachse beinhaltet, wobei die Gelenke (3.1, 3.2) jeweils ein Ende des Vorderrahmens (1) mit einem Ende des Hinterrahmens (2) wenigstens mittelbar verbinden, **dadurch gekennzeichnet,**
**dass** zur Tordierbarkeit zwischen Vorderrahmen (1) und Hinterrahmen (2) zwischen einem der Gelenke (3.1, 3.2) und einem der Enden entweder des Vorderrahmens (1) oder des Hinterrahmens (2) eine Koppelstange (3.3) mit zwei gelenkigen Enden angeordnet ist
und **dass** eine Anhängekupplung für landwirtschaftliche Geräte und Anhänger vertikal drehbar im Bereich des Mittelpunktes zwischen den vier Rädern des Hinterrahmens (2) ungeordnet ist.

4. Zugmaschine nach Anspruch 1, **dadurch gekennzeichnet, dass** die vertikale Drehachse des unteren Gelenkes (3.2) mit der vertikale Drehachse des oberen Gelenkes (3.1) identisch ist.

5. Zugmaschine nach einem der vorhergehenden Ansprüche, **dadurch gekennzeichnet, dass** eine einer Torsion zwischen Vorderrahmen (1) und Hinterrahmen (2) entgegen wirkende Rückstelleinrichtung angeordnet ist.

6. Zugmaschine nach einem der vorhergehenden Ansprüche, **dadurch gekennzeichnet, dass** zwischen der mindestens einen Hauptachse (4) des Vorderrahmens (1) und der mindestens einen Hauptachse (4) des Hinterrahmens (2) ein Differentialgetriebe (4.1) mit einer zuschaltbaren Differentialsperre angeordnet ist.

7. Zugmaschine nach einem der Ansprüche 9 bis 11, **dadurch gekennzeichnet, dass** eine Einrichtung zur Messung des Knickwinkels zwischen Vorderrahmen (1) und Hinterrahmen (2) sowie eine Steuerung zur automatischen Abschaltung von Differentialsperren bei Messung eines Knickwinkels angeordnet sind.

8. Zugmaschine nach einem der Ansprüche 3 bis 7, **dadurch gekennzeichnet, dass** jedes Pendel (5) mehrteilig ist und jeweils zwei obere Druckstäbe (5.1) und jeweils einen unteren Zugstab (5.2) aufweist und dass jeweils zwei obere Druckstäbe (5.1) und ein unterer Zugstab (5.2) ein Dreieck bilden, wobei die beiden oberen Druckstäbe (5.1) im Bereich eines Endes einer Hauptachse (4) um diese Hauptachse (4) drehbar miteinander verbunden sind.

9. Zugmaschine nach einem der Ansprüche 3 bis 7, **dadurch gekennzeichnet, dass** an den unteren Zugstäben (5.2) jeweils eine Einstelleinrichtung zur Längenveränderung angeordnet ist.

10. Zugmaschine nach Anspruch 8 oder 9, **dadurch gekennzeichnet, dass** an den unteren Zugstäben (5.2) jeweils eine Feder (5.3) angeordnet ist.

11. Zugmaschine nach einem der Ansprüche 8 bis 10, **dadurch gekennzeichnet, dass** an den unteren Zugstäben (5.2) jeweils eine Messeinrichtung zur Ermittlung der Zugkraft im Zugstab (5.2) angeordnet ist.

12. Zugmaschine nach einem der Ansprüche 3 bis 11, **dadurch gekennzeichnet, dass** die Koppelstange (3.3) dehnelastisch ausgebildet ist.

13. Zugmaschine nach Anspruch 5, **dadurch gekennzeichnet, dass** als Rückstelleinrichtung wenigstens ein Federelement (3.4) angeordnet ist, dessen erstes Ende an einem Ende entweder des Vorderrahmens (1) oder des Hinterrahmens (2) angeordnet ist und dessen zweites Ende an der Koppelstange (3.3) angeordnet ist.

14. Zugmaschine nach einem der Ansprüche 3 bis 13, **dadurch gekennzeichnet, dass** zwischen zwei Pendeln (5) jeweils einer der Hauptachsen (4) ein Differentialgetriebe (4.1) mit einer zuschaltbaren Differentialsperre angeordnet ist.

15. Zugmaschine nach einem der Ansprüche 3 bis 14, **dadurch gekennzeichnet, dass** an den Pendeln (5) zumindest annähernd horizontal verlaufende Zugstangen (8) mit jeweils zwei gelenkigen Enden angeordnet sind, wobei das erste Ende jeder Zugstange (8) jeweils an einem vorderen oder einem hinteren Ende eines Pendels (5) befestigt ist und das weitere Ende der Zugstange (8) entweder an einem Rahmen (1, 2) oder an der zugehörigen Hauptachse (4) im Bereich des zugehörigen Rahmens (1, 2) befestigt ist.

## Claims

1. All-wheel drive agricultural towing vehicle with pneumatic-tyred wheels (6) and articulated frame steering with a front frame (1), a rear frame (2) and an articulated joint (3), whereas respectively one main axle (4) with a driven shaft is arranged at the front frame (1) and at the rear frame (2), whereas respectively one two-armed pendulum (5) which can be swivelled around the main axle (4) is arranged at each end of each main axle (4), whereas respectively one single wheel (6) is arranged at the ends of the pendulum (5) by means of a wheel axle (6.1), whereas respectively one main axle (4) with two pendulums (5) and four wheels (6) forms a tandem pendulum, whereas each two-armed pendulum (5) can be swivelled independently around the main axle (4) towards the corresponding pendulum (5) of the same main axle (4),
whereas respectively four of eight wheels (6) are arranged in a row in a trace in direction of travel at each side of the towing vehicle,
whereas respectively two pendulums (5) being arranged at a main axle (4) can be rotated around the main axle (4) relative to one another,
whereas the articulated joint (3) contains an upper joint (3.1) and a lower joint (3.2) arranged below with respectively at least one nearly vertical pivot, whereas the joints (3.1, 3.2) respectively connect an end of the front frame (1) with an end of the rear frame (2) at least in an indirect manner, **characterised in that**
a bushing pivot joint is arranged between the front frame (1) and the rear frame (2), either at the front frame (1) or at the rear frame (2), for torsion purposes and that a tow bar for agricultural vehicles and trailers is arranged being vertically pivotable in a range of the centre between the four wheels of the rear frame (2).

2. All-wheel drive agricultural towing vehicle with pneumatic-tyred wheels (6) and articulated frame steering with a front frame (1), a rear frame (2) and an articulated joint (3), whereas respectively one main axle (4) with a driven shaft is arranged at the front frame (1) and at the rear frame (2), whereas respectively four of eight wheels (6) are arranged in a row in a trace in direction of travel at each side of the towing vehicle, whereas the articulated joint (3) contains an upper joint (3.1) and a lower joint (3.2) arranged below with respectively at least one nearly vertical pivot, whereas the joints (3.1, 3.2) respectively connect an end of the front frame (1) with an end of the rear frame (2) at least in an indirect manner, **characterised in that**
additionally respectively a second main axle (4) is arranged at the front frame (1) and at the rear frame (2), whereas respectively one single wheel (6) is arranged on the ends of the second main axle (4) by means of a wheel axle (6.1), an that a bushing pivot joint is arranged between the front frame (1) and the rear frame (2), either at the front frame (1) or at the rear frame (2), for torsion purposes and that a tow bar for agricultural vehicles and trailers is arranged being vertically pivotable in a range of the centre between the four wheels of the rear frame (2).

3. All-wheel drive agricultural towing vehicle with pneumatic-tyred wheels (6) and articulated frame steering with a front frame (1), a rear frame (2) and an articulated joint (3), whereas respectively one main axle (4) with a driven shaft is arranged at the front frame (1) and at the rear frame (2), whereas respectively one two-armed pendulum (5) which can be swivelled around the main axle (4) is arranged at each end of each main axle (4), whereas respectively one single wheel (6) is arranged at the ends of the pendulum (5) by means of a wheel axle (6.1), whereas respectively one main axle (4) with two pendulums (5) and four wheels (6) forms a tandem pendulum, whereas respectively four of eight wheels (6) are arranged in a row in a trace in direction of travel at each side of the towing vehicle, whereas respectively two pendulums (5) being arranged at a main axle (4) can be rotated around the main axle (4) relative to one another, whereas the articulated joint (3) contains an upper joint (3.1) and a lower joint (3.2) arranged below with respectively at least one nearly vertical pivot, whereas the joints (3.1, 3.2) respectively connect an end of the front frame (1) with an end of the rear frame (2) at least in an indirect manner, **characterised in that**
a coupling bar (3.3) with two articulated ends is arranged between the front frame (1) and the rear frame (2), between one of the joints (3.1, 3.2) and one of the ends of either the front frame (1) or the rear frame (2), for torsion purposes, and that a tow bar for agricultural vehicles and trailers is arranged being vertically pivotable in a range of the centre between the four wheels of the rear frame (2).

4. The towing vehicle according to claim 1, **characterised in that** the vertical pivot of the lower joint (3.2) is identical with the vertical pivot of the upper joint (3.1).

5. The towing vehicle according to one of the preceding claims, **characterised in that** a resetting device counteracting a torsion between the front frame (1) and the rare frame (2) is arranged.

6. The towing vehicle according to one of the preceding claims, **characterised in that** a differential (4.1) with a selectable differential lock is arranged between the at least one main axle (4) of the front frame (1) and the at least one main axle (4) of the rare frame (2).

7. The towing vehicle according to one of the claims 9 to 11, **characterised in that** a device for measuring the kink angle between the front frame (1) and the rare frame (2) as well as a control for automatic deactivation of differential locks when measuring a kink angle are arranged.

8. The towing vehicle according to one of the claims 3 to 7, **characterised in that** each pendulum (5) has multiple parts and comprises two respective upper compression bars (5.1) and one respective lower tension bar (5.2) and that two upper compression bars (5.1) and one lower tension bar (5.2) respectively form a triangle, whereas, in an area of an end of the main axle (4), both upper compression bars (5.1) are pivotably connected to each other around this main axle (4).

9. The towing vehicle according to one of the claims 3 to 7, **characterised in that** respectively one positioning device for longitudinal change is arranged at the lower tension bars (5.2).

10. The towing vehicle according to claim 8 or 9, **characterised in that** respectively one spring (5.3) is arranged at the lower tension bars (5.2).

11. The towing vehicle according to one of the claims 8 to 10, **characterised in that** respectively one measuring device is arranged at the lower tension bars (5.2) for determining the tractive force within the tension bar (5.2).

12. The towing vehicle according to one of the claims 3 to 11, **characterised in that** the coupling bar (3.3) is formed elastically.

13. The towing vehicle according to claim 5, **characterised in that** at least one spring element (3.4) is arranged as resetting device, whereas the first end of the spring element (3.4) is arranged at an end of either the front frame (1) or the rare frame (2) and whereas the second end of the spring element (3.4) is arranged at the coupling bar (3.3).

14. The towing vehicle according to one of the claims 3 to 13, **characterised in that** a differential (4.1) with a selectable differential lock is arranged between two pendulums (5) of each one of the main axles (4).

15. The towing vehicle according to one of the claims 3 to 14, **characterised in that** at least nearly horizontally running tension rods (8) with each two articulated ends are arranged at the pendulums (5), whereas the first end of each tension rod (8) is respectively mounted at a front end or at a rear end of a pendulum (5) and the other end of the tension rod (8) is mounted either at a frame (1, 2) or at the associated main axle (4) in the area of the associated frame (1, 2).

## Revendications

1. Tracteur agricole à traction intégrale monté sur roues à pneus gonflés à l'air (6) et à direction à châssis articulé, avec un châssis avant (1), un châssis arrière (2) et un joint articulé (3), un essieu principal (4) avec un arbre commandé étant respectivement disposé sur le châssis avant (1) et le châssis arrière (2), un bras oscillant (5) à deux branches et pouvant pivoter autour de l'essieu principal (4) étant disposé à chaque extrémité de chaque essieu principal (4), à chaque extrémité duquel une roue individuelle (6) est montée au moyen d'un axe de roue (6.1), chaque essieu principal (4) formant un bras en tandem avec deux bras oscillants (5) et quatre roues (6), chaque bras oscillant (5) à deux branches pouvant pivoter autour de l'essieu principal (4) indépendamment du bras oscillant (5) correspondant du même essieu principal (4),
quatre des huit roues (6) étant alignées l'une derrière l'autre de part et d'autre du tracteur dans le sens de marche,
les deux bras oscillants (5) disposés sur un essieu principal (4) étant rotatifs l'un par rapport à l'autre autour de l'essieu principal (4),
le joint articulé (3) comportant une articulation supérieure (3.1) et une articulation inférieure (3.2) disposée en dessous de la précédente, chacune présentant au moins un axe de rotation sensiblement vertical, les articulations (3.1, 3.2) reliant chacune au moins indirectement une extrémité du châssis avant (1) à une extrémité du châssis arrière (2), **caractérisé en ce que**, pour permettre la torsion entre le châssis avant (1) et le châssis arrière (2), une articulation tournante à douille est disposée sur le châssis avant (1) ou bien sur le châssis arrière (2), et **en ce qu'**une barre d'attelage pour machines agricoles et remorques, rotative verticalement, est disposée dans la zone du milieu entre les quatre roues du châssis arrière (2).

2. Tracteur agricole à traction intégrale monté sur roues à pneus gonflés à l'air (6) et à direction à châssis articulé, avec un châssis avant (1), avec un châssis avant (1), un châssis arrière (2) et un joint articulé (3), un essieu principal (4) avec un arbre commandé étant respectivement disposé sur le châssis avant (1) et le châssis arrière (2), quatre des huit roues (6) étant alignées l'une derrière l'autre de part et d'autre du tracteur dans le sens de marche,
le joint articulé (3) comportant une articulation supérieure (3.1) et une articulation inférieure (3.2) disposée en dessous de la précédente, chacune présentant au moins un axe de rotation sensiblement vertical, les articulations (3.1, 3.2) reliant chacune au moins indirectement une extrémité du châssis avant (1) à une extrémité du châssis arrière (2), **caractérisé en ce qu'**un deuxième essieu principal (4) est disposé en complément sur le châssis avant (1) et sur le châssis arrière (2), à chaque extrémité duquel une roue individuelle (6) est montée au moyen d'un axe de roue (6.1),
et
**en ce que**, pour permettre la torsion entre le châssis avant (1) et le châssis arrière (2), une articulation tournante à douille est disposée sur le châssis avant (1) ou bien sur le châssis arrière (2),
et **en ce qu'**une barre d'attelage pour machines agricoles et remorques, rotative verticalement, est disposée dans la zone du milieu entre les quatre roues du châssis arrière (2).

3. Tracteur agricole à traction intégrale monté sur roues à pneus gonflés à l'air (6) et à direction à châssis articulé,
avec un châssis avant (1), un châssis arrière (2) et un joint articulé (3), un essieu principal (4) avec un arbre commandé étant respectivement disposé sur le châssis avant (1) et le châssis arrière (2), un bras oscillant (5) à deux branches et pouvant pivoter autour de l'essieu principal (4) étant disposé à chaque extrémité de chaque essieu principal (4), à chaque extrémité duquel une roue individuelle (6) est montée au moyen d'un axe de roue (6.1), chaque essieu principal (4) formant un bras en tandem avec deux bras oscillants (5) et quatre roues (6),
quatre des huit roues (6) étant alignées l'une derrière l'autre de part et d'autre du tracteur dans le sens de marche,
les deux bras oscillants (5) disposés sur un essieu principal (4) étant rotatifs l'un par rapport à l'autre autour de l'essieu principal (4),
le joint articulé (3) comportant une articulation supérieure (3.1) et une articulation inférieure (3.2) disposée en dessous de la précédente, chacune présentant au moins un axe de rotation sensiblement vertical, les articulations (3.1, 3.2) reliant chacune au moins indirectement une extrémité du châssis avant (1) à une extrémité du châssis arrière (2), **caractérisé en ce que** pour permettre la torsion entre le châssis avant (1) et le châssis arrière (2), une barre d'accouplement (3.3) à deux extrémités articulées est disposée entre une des articulations (3.1, 3.2) et une des extrémités du châssis avant (1) ou bien du châssis arrière (2),
et **en ce qu'**une barre d'attelage pour machines agricoles et remorques, rotative verticalement, est disposée dans la zone du milieu entre les quatre roues du châssis arrière (2).

4. Tracteur selon la revendication 1, **caractérisé en ce que** l'axe de rotation vertical de l'articulation inférieure (3.2) est identique à l'axe de rotation vertical de l'articulation supérieure (3.1).

5. Tracteur selon l'une des revendications précédentes, **caractérisé en ce qu'**est prévu un mécanisme de rappel s'opposant à une torsion entre le châssis avant (1) et le châssis arrière (2).

6. Tracteur selon l'une des revendications précédentes, **caractérisé en ce qu'**un engrenage différentiel (4.1) avec un blocage de différentiel commutable est disposé entre le ou les essieux principaux (4) du châssis avant (1) et le ou les essieux principaux (4) du châssis arrière (2).

7. Tracteur selon l'une des revendications 9 à 11, **caractérisé en ce qu'**un dispositif de mesure de l'angle d'articulation entre le châssis avant (1) et le châssis arrière (2) ainsi qu'une commande d'arrêt automatique des blocages de différentiel sont prévus pour la mesure d'un angle d'articulation.

8. Tracteur selon l'une des revendications 3 à 7, **caractérisé en ce que** chaque bras oscillant (5) est en plusieurs parties et comprend deux barres de pression (5.1) et une barre de traction inférieure (5.2), et **en ce que** deux barres de pression supérieures (5.1) et une barre de traction inférieure (5.2) forment un triangle, les deux barres de pression supérieures (5.1) étant raccordées l'une à l'autre au niveau d'une extrémité d'un essieu principal (4) de manière à être rotatives autour dudit essieu principal (4).

9. Tracteur selon l'une des revendications 3 à 7, **caractérisé en ce qu'**un dispositif de réglage pour la variation de longueur est disposé sur chacune des barres de traction inférieures (5.2).

10. Tracteur selon la revendication 8 ou la revendication 9, **caractérisé en ce qu'**un ressort (5.3) est disposé sur chacune des barres de traction inférieures (5.2).

11. Tracteur selon l'une des revendications 8 à 10, **caractérisé en ce qu'**un dispositif de mesure pour la saisie de l'effort de traction de la barre de traction (5.2) est disposé sur chacune des barres de traction inférieures (5.2).

12. Tracteur selon l'une des revendications 3 à 11, **caractérisé en ce que** la barre d'accouplement (3.3) est élastiquement extensible.

13. Tracteur selon la revendication 5, **caractérisé en ce qu'**au moins un élément de ressort (3.4) est prévu comme dispositif de rappel, dont la première extrémité est disposée à une extrémité du châssis avant (1) ou bien du châssis arrière (2), et dont la deuxième extrémité est disposée sur la barre d'accouplement (3.3).

14. Tracteur selon l'une des revendications 3 à 13, **caractérisé en ce qu'**un engrenage différentiel (4.1) avec un blocage de différentiel commutable est disposé entre deux bras oscillants (5) d'un des essieux principaux (4).

15. Tracteur selon l'une des revendications 3 à 14, **caractérisé en ce que** des barres de traction (8) s'étendant au moins sensiblement horizontalement avec deux extrémités articulées chacune sont disposées sur les bras oscillants (5), la première extrémité de chaque barre de traction (8) étant fixée sur une extrémité avant ou une extrémité arrière d'un bras oscillant (5) et l'autre extrémité de la barre de traction (8) étant fixée sur un châssis (1, 2) ou bien sur l'essieu principal (4) correspondant au niveau du châssis (1, 2) correspondant.
